# EUROPEAN PATENT SPECIFICATION

(11) **EP 1 062 046 B1**
(45) Date of publication and mention of the grant of the patent: **04.03.2009**
(21) Application number: 99910926.7
(22) Date of filing: 12.03.1999
(51) Int. Cl.: B04B 9/12

(54) **A SUPPORT DEVICE**
UNTERSTÜTZUNGSGERÄT
DISPOSITIF DE SUPPORT

(30) Priority: 13.03.1998 SE 9800832
(43) Date of publication of application: 27.12.2000
(73) Proprietor: ALFA LAVAL AB, 147 80 Tumba (SE)
(72) Inventor: APPELQUIST, H kan, S-141 44 Huddinge (SE); SETTERBERG, Jan, S-141 41 Huddinge (SE)
(74) Representative: Berglund, Stefan
(86) International application number: PCT/SE1999/000395
(87) International publication number: WO 1999/046052

(56) References cited:
- DE-A1- 2 626 169
- SE-C2- 505 128
- US-A- 2 487 343
- US-A- 4 854 556
- US-A- 4 874 154
- US-A- 4 957 277

## Description

### THE BACKGROUND OF THE INVENTION AND PRIOR ART

The present invention refers to a centrifugal separator according to the preamble of claim 1, see SE-C-505 128.

Conventional spindle support devices for centrifugal separators are mainly of two different kinds, namely support devices, in which helical springs apply a force to oscillation-dampening friction buffers, and support devices, which are constructed by resilient rubber elements producing a dampening effect by inner friction.

Such known support devices comprises many components, which make them complicated and expensive. The dampening properties of the friction buffers as well as of the rubber elements are difficult to calculate. On the friction dampening surfaces coatings (coke) are formed, which change the dampening properties and result in a great risk for jamming. In the friction buffers, wearing particles are formed, which reduce the lifetime of the support device. The conduct of heat is insufficient in these known support devices, since rubber has a low heat conductivity and the friction surfaces of the friction buffers deteriorate the conduct of heat.

WO89/10794 discloses an examples of such a known support device for a centrifugal separator having a centrifuge rotor which is rotatable in a frame member by means of a bearing member. The support device comprises a number of support members extending radially outwardly from the bearing member and which each encloses a helical spring element. Consequently, these support members are arranged to permit relative radial movements between the centrifuge rotor and the frame member by being compressed in a respective space of the frame member. The helical spring elements thereby act on a piston movable in the space and abutting the outer wall of a bearing housing. By means of the spring constant of the helical spring elements, a certain stiffness of the known support device is obtained, which together with the resiliency of, for instance, the rotor spindle, determines the critical number of revolutions of the centrifuge rotor. In centrifugal separators, the helical springs of this type have to be dimensioned to the frequently very high stresses and fatigue risks to which they are subjected. The dampening of the radial movements is obtained by means of the friction which arises between the piston and its contact surfaces, in particular the outer wall of the bearing housing. The friction which arises results, in addition to the dampening of the relative movements, also in the generation of heat. Such a heat generation is not desirable and forces the bearing to operate at a relatively high temperature, which reduces the lifetime of the bearing. Another problem is that the arrangement of moving pistons is rather space requiring. Such a space may be difficult to provide for the support device in a centrifugal separator, in particular outside the so-called neck bearing. In addition, these known support devices have a rather complicated construction, which of course makes the manufacture and the mounting labour demanding and expensive. In addition, it is difficult to conduct heat away from the bearing member.

### SUMMARY OF THE INVENTION

The object of the present invention is to provide a support device, which from a construction point of view is less complicated than the support devices known up to now and by which the problems mentioned above may be remedied. In particular, it is aimed at a support device offering an optimal stiffness and concurrently an optimal dampening of the relative movements between the centrifuge rotor and the frame member.

This object is obtained by the centrifugal separator initially defined, which is characterized in that each support member comprises a rubber material provided at least in said space and arranged to increase the stiffness of the support member and at the same time to provide a dampening action of the support member. By such a support member, a desired stiffness may be obtained by dimensioning the helical spring elements in combination with the design and choice of hardness of the rubber material. Since the stiffness determines the critical number of revolutions of the centrifuge rotor, one may by this design of the support device obtain a desired critical number of revolutions. A suitable level of the dampening of the relative movements may be obtained by dimensioning the rubber material between the wire rounds of the helical spring element, i.e. the rubber material is, according to the invention, arranged in such a manner that it has a dampening effect to said relative movements. The incompressible rubber material will thereby be subjected to alternatively compression, expansion and therebetween inhomogeous loads due to shearing or bending of the helical spring element and the rubber material. By providing a rubber material in this manner in the spaces of the helical spring element, a high stiffness may be obtained by means of smaller helical springs without any risk for overload and/or fatigue. The inner friction, which dampens the oscillating movements, generates heat which is uniformly distributed and conducted by the helical spring element. In comparison with previously known, similar support devices, a support device designed in this manner is space saving.

According to the invention, a desired dampening may be obtained by providing rubber material merely in the space between the wire rounds. According to an embodiment of the invention, the wire is, however, at least partly embedded in the rubber material. In such a manner, the dampening effect of the rubber material may be increased and according to another embodiment, the dampening effect may be further increased by embedding substantially the wire in the rubber material.

According to a further embodiment of the invention, the wire is manufactured in a spring material, wherein the spring material is fixedly connected to the rubber material. In such a manner, the rubber material is forced to follow the movements of the helical spring element, i.e. the dampening of the rubber material is acting continuously. Thereby, the spring material may advantageously be fixedly connected to the rubber material by vulcanisation.

According to a further embodiment of the invention, means are arranged to enable the pretensioning of the helical spring elements in the direction of the respective longitudinal axis. Furthermore, each support member may be provided in a space which is delimited by a stop member, wherein the stop member may be positionable in different positions along the longitudinal axis in order to obtain a variable pretensioning degree of the helical spring element.

### BRIEF DESCRIPTION OF THE DRAWINGS

The present invention is now to be explained by means of different embodiments described as examples and with reference to the drawings attached, in which
Fig 1 discloses schematically a sideview of parts of a centrifugal separator having a support device according to the invention.
Fig 2 discloses a radial section through the support device according to a first embodiment of the invention.
Fig 3 discloses a radial section through a support device according to a second embodiment of the invention.
Figs 4-10 disclose sectional views of different variants of the support members of the support device according to the invention.

### DETAILED DESCRIPTION OF DIFFERENT EMBODIMENTS

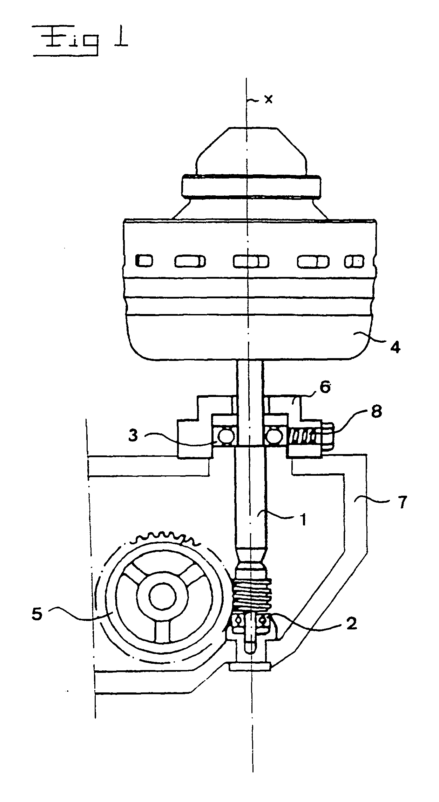

Fig 1 discloses schematically parts of a centrifugal separator having a vertical spindle 1, which is journalled in a lower bearing 2 and an upper bearing 3. The lower bearing 2 is arranged to absorb essentially axial forces acting on the spindle 1 and the upper bearing 3 is arranged to absorb essentially radial forces acting on the spindle 1. The spindle 1 carries at its upper end above the upper bearing 3 a centrifuge rotor 4. The spindle 1 and the centrifuge rotor 4 are rotatable about an axis x of rotation and driven in the example disclosed via a screw gear 5 but may of course also be belt driven.

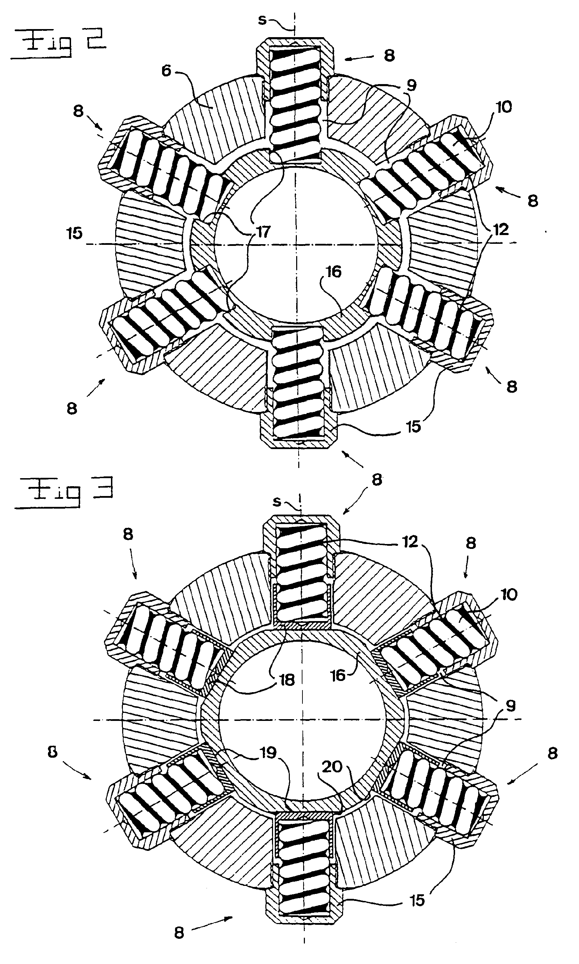

In the example disclosed, the upper bearing 3 is supported by means of a support device 6 which is fixedly connected to a substantially stationary frame member 7 and which comprises six support members 8 uniformly distributed around the spindle 1, see also Fig 2, which counteract but permit limited relative movements between the spindle 1 and the frame member 7. In particular, the support device 6 is arranged to permit a limited pivoting movement of the spindle 1, and details connected thereto, such as the centrifuge rotor 4, and the upper bearing 3 in relation to the frame member 7. The support device 6 may comprise more or less than six support members 8.

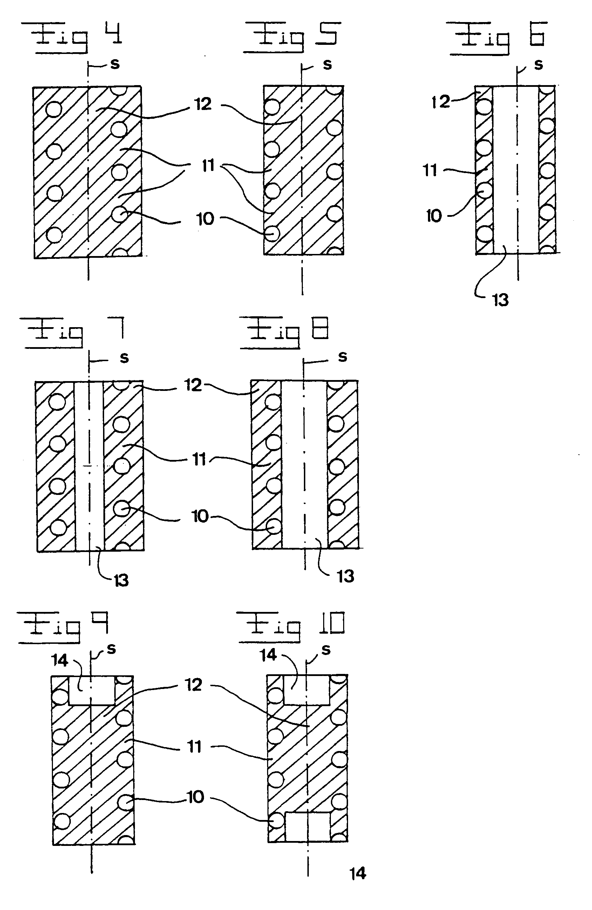

Each of the support members 8 has a longitudinal axis s which extends substantially radially with respect to the axis x of rotation. Each support member 8 is, which appears from Figs 2 and 3, provided in a space 9 of the support device 6, which space has the shape of a substantially circular cylindrical hole extending in essentially the same radial direction as the longitudinal axis s with respect to the axis x rotation. Furthermore, each support member 8 comprises a helical spring element 10 which is formed by a wire extending in an essentially helical path in such a manner that the wire forms a body of rotation having an axis of rotation coinciding with the longitudinal axis s. Furthermore, the wire forms a space 11 between adjacent rounds of the wire, see Figs 4-10. The wire is manufactured in an elastic, resilient material, preferably spring steel.

According to the invention, each support member 8 comprises a rubber material 12 extending in at least said spaces 11. Figs 4-10 disclose more closely how the rubber material 12 may be provided in relation to the helical spring element 10.

In the embodiment disclosed in Fig 6, the rubber material 12 is substantially merely provided in the spaces 11 between adjacent rounds of the wire of the helical spring element 10, i.e. the rubber material forms a tubular body having a wall thickness which is essentially equal to the thickness of the wire. In the embodiments according to Figs 5 and 8, the wire is at least partly embedded in the rubber material 12. In Fig 5, the rubber material 12 extends to an outer delimiting surface of the body of rotation formed by the helical spring element 10 and in Fig 8, the rubber material 12 extends to an inner delimiting surface of the body of rotation formed by the helical spring element 10. In the embodiment disclosed in Figs 4 and 7, the wire of the helical spring element 10 is completely embedded in the rubber material 12.

In the embodiments according to Figs 4 and 7, the rubber material 12 consequently forms an essentially complete, full body, which has an essentially circular cylindrical shape and in which the helical spring element 10 is completely embedded or enclosed. In the embodiments according to Figs 6-8, the rubber material forms a corresponding body having an essential circular cylindrical hole 13 extending through the body in the direction of the longitudinal axis s.

In the embodiments according to Figs 9 and 10, the rubber material 12 also forms a complete, full body having an essentially circular cylindrical shape and being provided with a circular recess 14 in one of the end surfaces, and with a circular recess 14 in each end surface, respectively.

In all embodiments according to Figs 4-10, the resilient material of the wire is fixedly connected to the rubber material 12, preferably through a vulcanisation process.

As appears from Fig 2, each support member 8 is enclosed in one of the spaces 9 mentioned above by means of a stop member in the shape of a screw member 15 which is screwed into a thread of the space 9. The support member 8 abuts, by its radially outer surface the screw member 15 and by its radial inner surface the bearing housing 16 carrying the upper bearing 3. In particular, the radially inner end of the support member 8 is provided in a recess 17 of the bearing housing 16. By means of the screw member 15, it is possible to pretension the helical spring element 10 of the support member 8 to a desired degree of pretensioning in the direction of the longitudinal axis s.

In the embodiment disclosed in Fig 3, the radially inner end of each support member 8 is provided in a piston member 18 which is displaceable in the recess 9 in the direction of the longitudinal axis s. The piston member 18 has a front surface 19 which is arranged to abut a peripheral surface portion 20 of the bearing housing 16. During the relative movements mentioned above, the front surface 19 will slide on the opposite surface portion 20, wherein the friction which arises contributes to a further dampening of the relative movements.

It is to be noted that, as appears from Figs 2 and 3, both the end rounds of the helical spring element 10 are at least partly in heat transferring metallic contact with the bearing housing 16 and the stop member 15 of the support member 8, respectively, which facilitates the conduct of heat from the support member 8.

The present invention is not restricted to the embodiments disclosed but may be varied and modified within the scope of the following claims.

In the examples disclosed in the figures, the spaces between all the wire rounds of the helical springs are completely filled with rubber material. In order to obtain a desired stiffness and a desired dampening characteristic, it is possible however, within the scope of the present invention, to fill merely the spaces between a part of the wire rounds of the helical springs and/or the spaces may only partly be filled with rubber material.

It is to be noted that although the helical spring elements 10 are disclosed in the shape of a circular cylindrical helical spring, it is possible within the scope of the invention to design these springs as conical helical springs. They may also have a cross-sectional shape which deviates from a circular shape. Moreover, the cross-sectional dimension of the wire of the spring element 10 disclosed in Figs 4-10 is only schematic.

In the embodiments disclosed, the longitudinal axis s of all support members 8 extend in a common radial plane. However, it is also possible to provide the support members 8 in such a manner that the axes s extend in different planes, for instance, in two parallel radial planes in such a manner that every second support member 8 is associated to one of the planes and every second support member 8 to the other plane. In such a manner, further space may be obtained so that more support members 8 than the support members disclosed in Figs 2 and 3 may be provided, for instance 12 support members 8.

## Claims

1. A centrifugal separator comprising a support device for a spindle (1), which carries a centrifuge rotor (4) of the centrifugal separator and which is provided in a frame member (7) by means of a bearing member (3) to be rotatable about an axis (x) of rotation, wherein the support device (6) comprises at least three support members (8), which are arranged to absorb relative movements between the centrifuge rotor (4) and the frame member (7) and which each is provided between the bearing member (3) and the frame member (7) and has a longitudinal axis (s) extending outwardly with respect to the axis (x) of rotation, wherein each support member (8) comprises a helical spring element (10), having a wire extending in an essentially helical path in such a manner that a space (11) is formed between adjacent rounds of the wire, **characterized in that** each support member (8) comprises a rubber material (12) provided at least in said space (11) and arranged to increase the stiffness of the support member (8) and at the same time to provide a dampening action of the support member (8).

2. A centrifugal separator according to claim 1, **characterized in that** the rubber material (12) is arranged in such a manner that it produces a dampening effect to said relative movements.

3. A centrifugal separator according to any one of claims 1 and 2, **characterized in that** the wire is at least partly embedded in the rubber material (12).

4. A centrifugal separator according to any one of claims 1-3, **characterized in that** the wire is substantially embedded in the rubber material (12).

5. A centrifugal separator according to any one of the preceding claims, **characterized in that** the wire is manufactured in a spring material and that the spring material is fixedly connected to the rubber material (12).

6. A centrifugal separator according to claim 5, **characterized in that** the spring material is fixedly connected to the rubber material (12) by a vulcanisation.

7. A centrifugal separator according to any one of the preceding claims, **characterized in that** the longitudinal axis (s) of the support members (8) extends substantially radially with respect to the axis (x) of rotation.

8. A centrifugal separator according to any one of the preceding claims, **characterized by** means (15) which are arranged to enable a pretensioning of the helical spring elements (10) in the direction of the respective longitudinal axis (s).

9. A centrifugal separator according to any one of the preceding claims, **characterized in that** each support member (8) is provided in a space (9) which is delimited by a stop member (15).

10. A centrifugal separator according to claim 9, **characterized in that** the stop member (15) is positionable in different positions along the longitudinal axis (s).

## Patentansprüche

1. Zentrifugalseparator mit einer Lagerung für eine Spindel (1), die einen Zentrifugenrotor (4) des Zentrifugalseparators trägt und mittels eines Lagers (3) in einem Rahmenglied (7) um eine Achse (x) drehbar gelagert ist, wobei die Lagerung (6) mindestens drei Stützelemente (8) aufweist, die die Relativbewegungen zwischen dem Zentrifugenrotor (4) und dem Rahmenglied (7) aufnehmen sollen und jeweils zwischen dem Lager (3) und dem Rahmenglied (7) angeordnet sind und eine Längsachse (s) aufweisen, die sich bezüglich der Drehachse (x) auswärts erstrecken, wobei jedes Stützelement (8) ein Schraubfederelement (10) mit einem Draht aufweist, der im Wesentlichen wendelförmig so verläuft, dass zwischen nebeneinanderliegenden Drahtwindungen ein Raum (11) entsteht, **dadurch gekennzeichnet, dass** jedes Stützelement (8) ein Gummimaterial (12) aufweist, das mindestens im Raum (11) vorgesehen und so angeordnet ist, dass es die Steife des Stützelements (8) erhöht und gleichzeitig dem Stützelement (8) eine Dämpfungswirkung erteilt.

2. Zentrifugalseparator nach Anspruch 1, **dadurch gekennzeichnet, dass** das Gummimaterial (12) so angeordnet ist, dass es die Relativbewegungen dämpft.

3. Zentrifugalseparator nach einem der Ansprüche 1 und 2, **dadurch gekennzeichnet, dass** der Draht mindestens teilweise in das Gummimaterial (12) eingebettet ist.

4. Zentrifugalseparator nach einem der Ansprüche 1-3, **dadurch gekennzeichnet, dass** der Draht im Wesentlichen in das Gummimaterial (12) eingebettet ist.

5. Zentrifugalseparator nach einem der vorgehenden Ansprüche, **dadurch gekennzeichnet, dass** der Draht aus Federwerkstoff gefertigt ist und der Federwerkstoff mit dem Gummimaterial (12) fest verbunden ist.

6. Zentrifugalseparator nach Anspruch 5, **dadurch gekennzeichnet, dass** der Federwerkstoff durch Vulkanisieren fest mit dem Gummimaterial (12) verbunden ist.

7. Zentrifugalseparator nach einem der vorgehenden Ansprüche, **dadurch gekennzeichnet, dass** die Längsachse (s) der Stützelemente (8) im Wesentlichen radial bezüglich der Drehachse (x) verläuft.

8. Zentrifugalseparator nach einem der vorgehenden Ansprüche, **gekennzeichnet durch** Einrichtungen (15), die angeordnet sind, die Schraubfederelemente (10) in Richtung der zugehörigen Längsachse (s) vorzuspannen.

9. Zentrifugalseparator nach einem der vorgehenden Ansprüche, **dadurch gekennzeichnet, dass** die Stützelemente (8) jeweils in einem Raum (9) vorgesehen sind, der durch ein Anschlagelement (15) begrenzt ist.

10. Zentrifugalseparator nach Anspruch 9, **dadurch gekennzeichnet, dass** das Anschlagelement (15) entlang der Längsachse (s) unterschiedlich positionierbar ist.

## Revendications

1. Séparateur centrifuge comprenant un dispositif de support pour un arbre (1), qui supporte un rotor centrifuge (4) du séparateur centrifuge et qui est placé dans un élément formant cadre (7) au moyen d'un élément formant palier (3) de manière à pouvoir tourner autour d'un axe (x) de rotation, dans lequel le dispositif de support (6) comprend au moins trois éléments de support (8), qui sont conçus pour amortir les mouvements relatifs entre le rotor centrifuge (4) et l'élément formant cadre (7) et qui sont placés chacun entre l'élément formant palier (3) et l'élément formant cadre (7) et ont un axe longitudinal (s) s'étendant vers l'extérieur par rapport à l'axe (x) de rotation, chaque élément de support (8) comprenant un élément formant ressort hélicoïdal (10), ayant un fil s'étendant sur un trajet essentiellement hélicoïdal de telle manière qu'un espace (11) soit formé entre des spires adjacentes du fil, **caractérisé en ce que** chaque élément de support (8) comprend un matériau en caoutchouc (12) placé au moins dans ledit espace (11) et conçu pour accroître la rigidité de l'élément de support (8) et pour simultanément offrir une action d'amortissement de l'élément de support (8).

2. Séparateur centrifuge selon la revendication 1, **caractérisé en ce que** le matériau en caoutchouc (12) est conçu de telle manière qu'il produit un effet d'amortissement desdits mouvements relatifs.

3. Séparateur centrifuge selon l'une quelconque des revendications 1 et 2, **caractérisé en ce que** le fil est au moins en partie encastré dans le matériau en caoutchouc (12).

4. Séparateur centrifuge selon l'une quelconque des revendications 1 à 3, **caractérisé en ce que** le fil est sensiblement encastré dans le matériau en caoutchouc (12).

5. Séparateur centrifuge selon l'une quelconque des revendications précédentes, **caractérisé en ce que** le fil est fabriqué dans un matériau pour ressort et **en ce que** le matériau pour ressort est raccordé de manière fixe au matériau en caoutchouc (12).

6. Séparateur centrifuge selon la revendication 5, **caractérisé en ce que** le matériau pour ressort est raccordé de manière fixe au matériau en caoutchouc (12) par vulcanisation.

7. Séparateur centrifuge selon l'une quelconque des revendications précédentes, **caractérisé en ce que** l'axe longitudinal (s) des éléments de support (8) s'étend sensiblement radialement par rapport à l'axe (x) de rotation.

8. Séparateur centrifuge selon l'une quelconque des revendications précédentes, **caractérisé par** des moyens (15) qui sont conçus pour permettre une précontrainte des éléments formant ressort hélicoïdal (10) dans la direction de l'axe longitudinal (s) respectif.

9. Séparateur centrifuge selon l'une quelconque des revendications précédentes, **caractérisé en ce que** chaque élément de support (8) est placé dans un espace (9) qui est délimité par un élément d'arrêt (15).

10. Séparateur centrifuge selon la revendication 9, **caractérisé en ce que** l'élément d'arrêt (15) peut être positionné dans différentes positions le long de l'axe longitudinal (s).
